# EUROPÄISCHE PATENTSCHRIFT

(11) **EP 0 644 907 B1**
(45) Veröffentlichungstag und Bekanntmachung des Hinweises auf die Patenterteilung: **09.10.1996**
(21) Anmeldenummer: 93912777.5
(22) Anmeldetag: 25.05.1993
(51) Int. Cl.: C08G 73/00, C08L 101/00

(54) **POLYANILE**
POLYANILES
POLYANILES

(30) Priorität: 06.06.1992 DE 4218766
(43) Veröffentlichungstag der Anmeldung: 29.03.1995
(73) Patentinhaber: BASF Aktiengesellschaft, 67063 Ludwigshafen (DE)
(72) Erfinder: NAARMANN, Herbert, D-6719 Wattenheim (DE); GOMPPER, Rudolf, D-8000 München 60 (DE); MUELLER, Thomas, D-8901 Aystetten (DE)
(86) Internationale Anmeldenummer: EP9301303
(87) Internationale Veröffentlichungsnummer: WO9325603

(56) Entgegenhaltungen:
- FR-A- 2 310 426
- GB-A- 1 080 526
- PATENT ABSTRACTS OF JAPAN vol. 10, no. 28 (C-326)(2085) 4. Februar 1986 & JP,A,60 181 127

## Beschreibung

Die vorliegende Erfindung betrifft Polyanile der allgemeinen Formel I 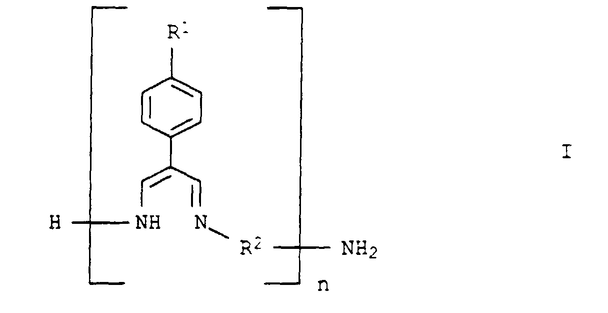 in der die Substituenten und Indices folgende Bedeutung haben:
- R¹: C₁- bis C₂₄-Alkylgruppen, C₁- bis C₂₄-Alkoxygruppen, Cl, Br, CF₃ oder NO₂
- R²: para-Phenylen, kondensierte aromatische Ringsysteme mit 10 bis 30 C-Atomen oder 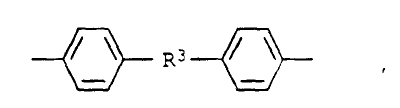
wobei R³ eine chemische Bindung S, O, NH, CH₂, CH-CH, CO, SO oder SS bedeutet
und
- n: eine ganze Zahl von 5 bis 100
sowie deren Säureadditionssalze der allgemeinen Formel II 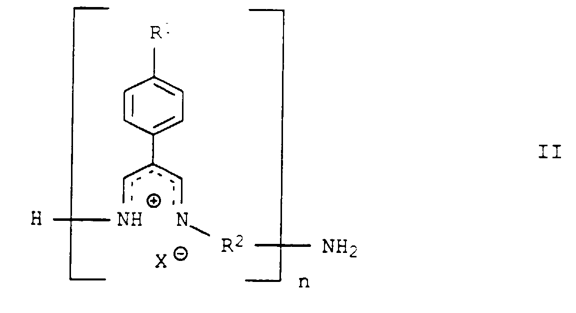 in der X⁻ für ClO₄⁻, BF₄⁻ AsF₆⁻ oder 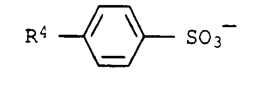 steht, wobei R⁴ eine C₁- bis C₈-Alkylgruppe bedeutet.

Außerdem betrifft die Erfindung Verfahren zur Herstellung dieser Polyanile sowie deren Verwendung als elektrisch leitfähige Materialien. Darüber hinaus betrifft die vorliegende Erfindung die Verwendung der Polyanile zu nichtlinear optischen Zwecken.

Aus dem Handbook of Polym. Synthesis, Part B, 1390 (1992) edit. by H. R. Kricheldorf, Marcel Dekker, New York, ist bekannt, Anilin durch Oxidation in Anilinschwarz, auch Polyanilin genannt, zu überführen. Diese Polymeren sind jedoch nicht einheitlich aufgebaut, sie enthalten neben Einheiten des Typs 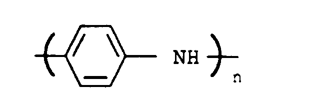 auch chinoide Strukturen, darüber hinaus sind diese Produkte durch andere Oxidationsprodukte verunreinigt und wegen ihrer Schwer- bzw. Unlöslichkeit praktisch nicht zu reinigen und exakt zu charakterisieren.

Der Erfindung lag daher die Aufgabe zugrunde, Polymersysteme zur Verfügung zu stellen, die diese Nachteile nicht aufweisen, und über eine ausgedehnte π-Konjugation verfügen.

Die Aufgabe wird erfindungsgemäß gelöst durch die eingangs definierten Polyanile. Weiterhin wurden Verfahren zur Herstellung dieser Polyanile sowie deren Verwendung als elektrisch leitfähige und nichtlinear optische Materialien gefunden.

Von den Polyanilen der allgemeinen Formel I sind diejenigen Verbindungen bevorzugt, in denen R¹ eine löslich machende Gruppe darstellt, insbesondere C₁- bis C₁₃-Alkylgruppen und C₁- bis C₁₃-Alkoxygruppen. Als bevorzugte Reste R² sind para-Phenylen, Naphthylen, Anthracylen und 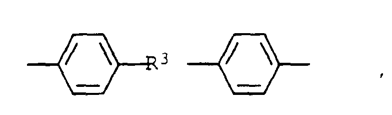 wobei R³ S, NH oder CH=CH bedeutet, zu nennen. Besonders bevorzugt wird para-Phenylen. Der Index n nimmt bevorzugt Werte von 10 bis 50 an.

Bei den Säureadditionssalzen der allgemeinen Formel II sind die Verbindungen bevorzugt, bei denen die Substituenten R¹, R² und R³ sowie der Index n die bei den Polyanilen der allgemeinen Formel I als bevorzugt aufgeführten Bedeutungen haben. Das Anion X⁻ steht insbesondere für ClO₄⁻ oder 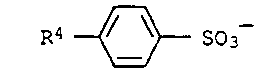 wobei R⁴ vorzugsweise für C₁- bis C₄-Alkylgruppen steht.

Die Herstellung der erfindungsgemäßen Polyanile kann dadurch erfolgen, daß man in einem ersten Schritt Verbindungen der allgemeinen Formel III 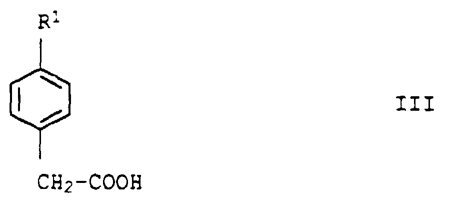 einer Vilsmeier-Haack-Arnold-Reaktion unterwirft und somit ein Amidin erzeugt, welches in einem zweiten Schritt durch Zugabe aromatischer Diamine zu den Polyanilen der allgemeinen Formel I umgesetzt wird.

Verbindungen der allgemeinen Formel III und Verfahren zu ihrer Herstellung sind dem Fachmann an sich bekannt. Für den Fall, daß R¹ eine Alkoxygruppe darstellt, ist es beispielsweise möglich, von der entsprechenden Hydroxyverbindung 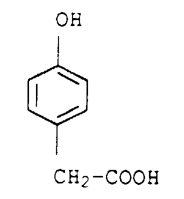 auszugehen und diese durch Umsetzung mit einem Alkylhalogenid in die Alkoxyverbindung zu überführen.

Bei der Vilsmeier-Haack-Arnold-Reaktion werden Verbindungen der allgemeinen Formel III mit Dimethylformamid und POCl₃ versetzt, wobei ein Amidin entsteht, bzw. durch Zugabe von beispielsweise NaClO₄ ein Amidiniumsalz. Das Molverhältnis von Dimethylformamid zu den Verbindungen der allgemeinen Formel III beträgt in der Regel 20:1 bis 2:1, vorzugsweise 6:1 bis 4:1, das Molverhältnis von POCl₃ zu den Verbindungen der allgemeinen Formel III 5:1 bis 1:1, bevorzugt 4:1 bis 2:1. Weitere Ausführungen zur Vilsmeier-Haack-Arnold-Reaktion sind in Houben Weyl VII/1, 29-36 [1954], Georg Thieme Verlag, Stuttgart, zu finden.

In einem zweiten Schritt kann nun das entstandene Amidin bzw. Amidiniumsalz zu den Polyanilen der allgemeinen Formel I bzw. zu deren Säureadditionssalzen der allgemeinen Formel II umgesetzt werden. Hierzu wird das Amidin bzw. Amidiniumsalz mit einem aromatischen Diamin der allgemeinen Formel

H₂N-R²-NH₂

umgesetzt.

Die bevorzugten Reste R², die bei den Polyanilen aufgeführt wurden, sind Folge der hier bevorzugt eingesetzten Diamine.

Die Umsetzung des Amidins bzw. Amidiniumsalzes mit dem aromatischen Diamin kann in einem Lösungsmittel, beispielsweise in Alkoholen, bevorzugt in Ethanol, erfolgen. Die Reaktionstemperaturen betragen in der Regel 10 bis 150°C, die Reaktionszeiten 1 bis 20 Stunden. Anschließend wird die Reaktionsmischung abgekühlt, das entstandene Polyanil isoliert, gereinigt und getrocknet.

Das Molverhältnis von aromatischem Diamin zu Amidin bzw. Amidiniumsalz beträgt 1,5:1 bis 0,75:1, bevorzugt 1,1:1 bis 0,9:1.

Die Herstellung der Säureadditionssalze erfolgt durch Zugabe von Säuren zu den Polyanilen, wobei das Molverhältnis von Säure zu Polyanil üblicherweise 2:1 bis 1:1 beträgt. Vorzugsweise wird hierbei bei Raumtemperatur gearbeitet.

Die erfindungsgemäßen Polyanile verfügen über ausgedehnte Π-Konjugation, sind in Toluol, Chloroform, Dimethylformamid und N-Methylpyrrolidon löslich und können als Lacke, Überzüge, Antioxidantien, Radikalfänger und vorzugsweise als elektrisch leitfähige Materialien verwendet werden.

Man erhält die elektrisch leitfähigen Verbindungen, indem man die erfindungsgemäßen Polyanile dotiert. Das Dotieren kann z.B. nach chemischen Verfahren erfolgen, wie sie in Makromol. Synth. Vol. I, 571 (1977) oder "Chemie in unserer Zeit", 20. Jahrgang, 1986/Nr. 1, S. 10, beschrieben sind.

Besonders zweckmäßig ist das elektrochemische Dotieren durch anodische Oxidation. Man nimmt hierfür eine elektrolytische Zelle, die ein Platin-Netz enthält, worin das pulverförmige erfindungsgemäße Polyanil eingebracht ist. Als Kathode dient zweckmäßig ein Edelstahlblech. Man kann bei einer Stromdichte von 0,05 bis 100 mA/cm² arbeiten. Die elektrolytische Zelle wird mit einem Elektrolytlösungsmittel und mit einem Leitsalz beschickt. Als 5 Elektrolytlösungsmittel kommen z.B. nichtwäßrige Lösungsmittel wie Aceton, Acetonitril, Dimethylformamid, Dimethylsulfoxid, Methylenchlorid oder Propylencarbonat in Frage. Es können aber auch Wasser oder Gemische von Wasser mit solchen Lösungsmitteln, die mit Wasser mischbar sind, sowie Emulsionen der Leitsalze im Wasser Verwendung finden. Die Konzentration der Leitsalze beträgt zweckmäßig 0,01 bis 0,1 Mol/l.

Als Anionen für das Leitsalz haben sich BF₄⁻, R-SO₃⁻, ASF₆⁻, SbF₆ , SbCl₆⁻, ClO₄⁻, HSO₄⁻ und SO₄2⁻ als günstig erwiesen. Eine weitere Gruppe von Leitsalz-Anionen leiten sich von Aromaten mit sauren Gruppen ab. Hierzu gehört das C₆H₅COO⁻ Anion sowie insbesondere die Anionen von gegebenenfalls mit Alkylgruppen substituierten aromatischen Sulfonsäuren.

Geeignete Kationen enthaltende Leitsalze sind z.B. Alkali- oder Erdalkalikationen, wie Lithium, Natrium, Kalium. Es können aber auch Ammoniumkationen im Leitsalz enthalten sein. Mitunter können die Säuren Verwendung finden, die Leitsalzanionen enthalten.

Das Dotieren der erfindungsgemäßen Copolymeren mit den Leitsalzanionen nimmt einen Zeitraum von etwa 10 bis 120 Minuten ein. Man erhält nach dieser Arbeitsweise elektrisch leitfähige Polymere.

Die erfindungsgemäßen Polyanile können auch als nichtlinear optische (NLO) Materialien verwendet werden. Im allgemeinen erfolgt die Anwendung nichtlinear optischer Materialien mittels verschiedener Dünnschichttechniken, die in der Elektronikindustrie zur Herstellung von dünnen Schichten auf verschiedenen Substraten Anwendung finden. Ein relativ einfaches Verfahren zur Herstellung von Schichten für optische Materialien bietet das sogenannte Spin-Coat-Verfahren. Diese Methode führt zu homogenen, transparenten Schichten, die entweder aus reinen nichtlinear optisch aktiven Materialien oder einer Mischung aus transparentem Matrixpolymer und NLO-Material aufgebaut sind. Zur technischen Realisierung dieses Verfahrens müssen die zu beschichtenden Substanzen entweder rein oder in Kombination mit einem Polymer homogen gelöst werden. Die Schichtdicke der beim Spincoatprozeß erhaltenen Schicht ist abhängig von den rheologischen Eigenschaften der Lösungen, sowie von der Umdrehungsgeschwindigkeit des Substrates bei der Beschichtung.

Zur Herstellung von Filmen mit Schichtdicken > 1 µm können auch Rakel- bzw. Gießtechniken angewendet werden. In der Regel werden die so hergestellten Filme anschließend so getrocknet, daß sich möglichst keine Risse bilden oder Inhomogenitäten auftreten.

Die erfindungsgemäßen Polyanile können z.B. in Form von Lösung direkt dem oben beschriebenen Spin-Coat-Verfahren unterzogen werden. Der Feststoffgehalt der Lösungen liegt dabei in der Regel im Bereich von 0,5 bis 50 Gew.-%, vorzugsweise von 0,5 bis 15 Gew.-%.

Den erfindungsgemäßen Polyanilen können transparente organische Polymere beigemischt sein. Dabei kommen im Prinzip alle Polymere in Frage, die transparente Filme liefern. Geeignete Polymermaterialien sind im allgemeinen Polystyrol, Polyvinylacetat, Polyacrylate, nichtkristalline Polyurethane, Mischpolyamide, Polyimidazole, vorzugsweise jedoch Polymethylmethacrylat oder Polyvinylpyrrolidon. Der Gehalt an NLO-aktivem Polyen in der Mischung beträgt im allgemeinen 5 bis 95 Gew.-%, vorzugsweise 10 bis 80 Gew.-%.

Die Wahl geeigneter Lösungsmittel für den Spin-Coat-Prozeß ist hauptsächlich abhängig von der Löslichkeit des NLO-Materials und, falls die Anwendung der Mischung erfolgt, von der Löslichkeit des transparenten Polymeren. Geeignete Lösungsmittel sind z.B. Chloroform oder N-Methylpyrrolidon oder auch Lösungsmittelgemische.

Als Trägermaterialien eignen sich im allgemeinen Glas, Siliziumwafer oder auch transparente Polymere, darunter Polymethylmethacrylat und Polystyrol.

### Beispiele

Herstellung von 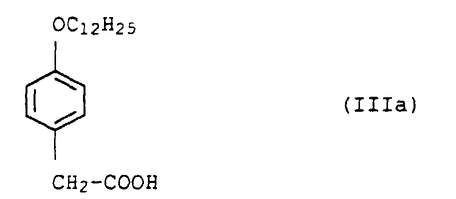 13,0 g (=̂ 85 mmol) 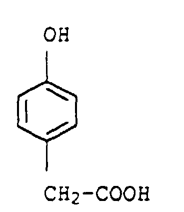 wurden mit 23,4 g (=̂ 94 mmol) C₁₂H₂₅Br und 9,54 g (=̂ 170 mmol) KOH, gelöst in 50 ml Ethanol, versetzt und 18 Stunden unter Rückfluß zum Sieden erhitzt. Anschließend wurden 4,77 g (=̂ 85 mmol) KOH, gelöst in 50 ml Ethanol, hinzugegeben und weitere 2 Stunden unter Rückfluß zum Sieden erhitzt. Dann wurde auf Raumtemperatur abgekühlt, mit 250 ml 2 n HCl angesäuert, das entstandene Produkt abgesaugt, mit Wasser gewaschen, in Diethylether aufgenommen, mit MgSO₄ getrocknet, isoliert und das restliche Lösungsmittel entfernt.
Ausbeute: 22,4 g (82 % der Theorie)
Schmelzpunkt: 78 bis 79°C

| | | | |
|---|---|---|---|
| C₂₀H₃₂O₃: | ber: | C 74,96 | H 10,06 |
| | gef.: | C 75,52 | H 10,25 |

Umsetzung von IIIa mittels der Vilsmeier-Haack-Arnold-Reaktion zu 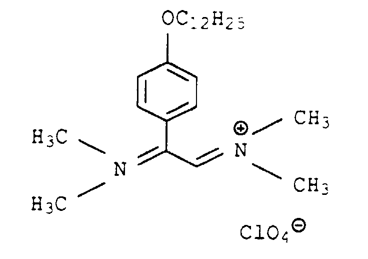 4,25 ml (=̂ 55 mmol) Dimethylformamid wurden unter Feuchtigkeitsausschluß auf 0°C abgekühlt, langsam mit 3,00 ml (=̂ 33 mmol) POCl₃ versetzt und 1 Stunde bei Raumtemperatur gerührt. Hierzu wurden 3,54 g (=̂ 11 mmol) IIIa gegeben und die Reaktionsmischung 13 Stunden bei 85°C gehalten. Nach Abkühlung auf Raumtemperatur wurde die Reaktionsmischung auf Eis gegeben, unter Rühren mit 1,5 g (=̂ 11 mmol) NaClO₄ versetzt, das Produkt auskristallisieren lassen, abgesaugt und mit Wasser und Diethylether gewaschen.
Ausbeute: 4,02 g (75 % der Theorie)
Schmelzpunkt: 101 bis 102°C

| | | | | |
|---|---|---|---|---|
| [C₂₅H₄₃N₂O]ClO₄ | ber: | C 61,65 | H 8,90 | N 5,75 |
| | gef.: | C 61,58 | H 8,83 | N 5,67 |

### Beispiele 1 bis 4

0,95 g (=̂ 2 mmol) des Amidiniumsalzes 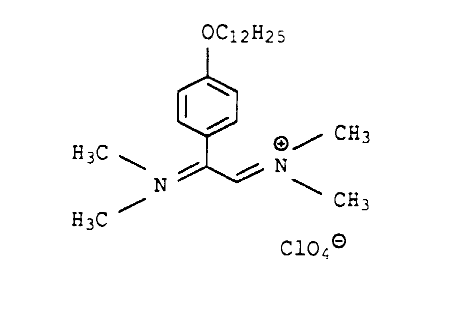 wurden mit jeweils 2 mmol verschiedener aromatischer Diamine, 10 ml Ethanol und 5 Tropfen Eisessig versetzt und 16 Stunden unter Rückfluß zum Sieden erhitzt. Nach Abkühlung auf Raumtemperatur wurden die jeweils entstandenen Produkte abgesaugt, mit Ethanol und einer Mischung aus Ethanol und Triethylamin (Molverhältnis 10:1) gewaschen, mit Diethylether dispergiert, nochmals abgesaugt und getrocknet.

### Bestimmung der Leitfähigkeit

Jeweils 10 mg der in den Beispielen 1 bis 4 hergestellten Polyanile wurden in ein Platin-Netz gepreßt und als Anode geschaltet. Als Elektrolyt diente eine 0,1 molare Lösung von N^{⊕}(n-Butyl)₄BF₄^{⊖} in Acetonitril. Als Gegenelektrode wurde eine Platin-Kathode der Abmessungen 3 cm x 3 cm x 0,1 cm verwendet. Die Proben im Platin-Netz wurden bei einer Stromdichte von 10 mA/cm² 60 Minuten lang beladen, dann dem Platin-Netz entnommen, dreimal mit je 2 ml Aceton gewaschen, 10 Stunden bei 75°C und 20 Torr getrocknet und dann als Pulverpreßling bei einem Preßdruck von 300 atü vermessen.

Die inhärente Viskosität ηᵢₙₕ wurde an einer 0,5 gew.-%igen Lösung in Dimethylformamid bei 23°C bestimmt.

Über die verwendeten Diamine und die Eigenschaften der entstandenen Polyanile gibt die nachfolgende Tabelle Aufschluß.

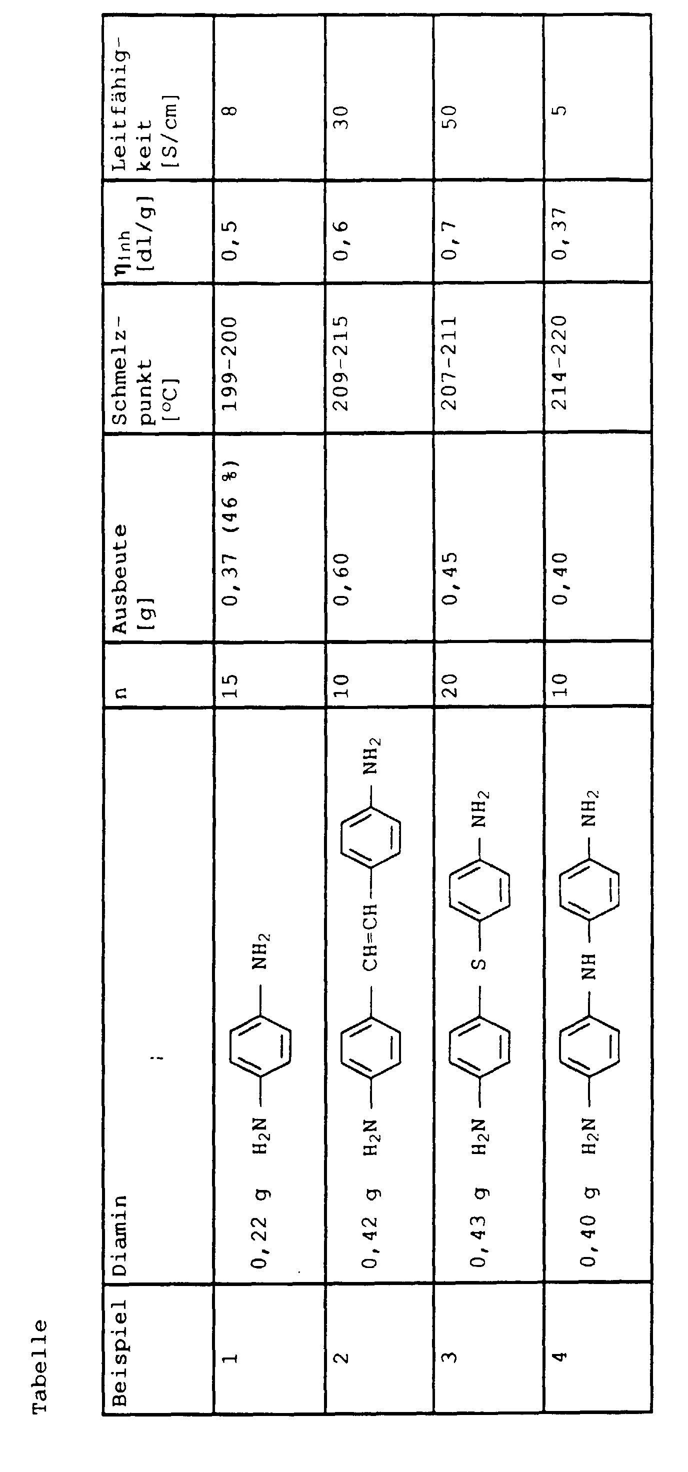

Bei Beispiel 1 ergab die Elementaranalyse:

| | | | |
|---|---|---|---|
| ber: | C 78,41 | H 9,02 | N 6,77 |
| gef: | C 78,65 | H 8,89 | N 7,12 |

### Beispiel 5

Ein dünner Film des nach Beispiel 2 erhaltenen Polyanils wurde durch Spin-Coating aus Chloroform hergestellt. Die Schichtdicke betrug 37 nm. Die Absorption des Films zeigte ein Maximum bei 495 nm.

Zur Messung der Frequenzverdreifachung, ausgedrückt durch die nichtlinear optische Suszeptibilität χ³ [esu], wurde jeweils eine Probe in einer Vakuumkammer, die mit für das ein- und ausfallende Licht durchlässigen Fenstern versehen war, auf eine von außen drehbare Halterung, montiert. Die Vakuumkammer wurde verschlossen und evakuiert. Mittels eines optischen Aufbaus, bestehend aus mehreren Spiegeln und Linsen, wurde ein IR-Puls, dessen Frequenz von 0,8 bis 2,2 µm variiert werden konnte, auf die Probe fokussiert. Der IR-Puls wurde von einem parametrischen Oszillator erzeugt, der von einem frequenzverdreifachten Nd-YAG-Laser gepumpt wurde. Ein Anteil des Lichtes trat nach dem Durchgang durch die Probe mit einer verdreifachten Frequenz aus. Um zu verhindern, daß sich das Licht der beim Durchgang durch die Probe erzeugten verdreifachten Wellen durch destruktive Interferenz auslöschen, wurde die Strecke die das Licht durch die Probe zurücklegt, d. h. Probendicke, so optimiert, daß der Anteil des frequenzverdreifachten Lichtes ein Intensitätsmaximum zeigte. Dies wurde durch Drehen der Probe bewerkstelligt.

Der Anteil des Lichtes, dessen Frequenz nach dem Durchgang durch die Probe verdreifacht worden war, wurde mittels eines Doppel5 monochromators von dem Restlicht abgetrennt. Die Intensität des frequenzverdreifachten Lichtes wurde mit Hilfe eines Photomultipliers mit nachgeschaltetem Digitaloszilloskop gemessen. Anschließend wurde die so erhaltene relative Intensität mit der Intensität eines Quarzsubsrates, dessen χ⁽³⁾-Wert bekannt war, unter Berücksichtigung von Schichtdicke und Absorptionsverhalten der Probe verglichen. Damit konnte der Meßwert in einen absoluten χ⁽³⁾-Wert umgerechnet werden.

Frequenzverdreifachungsmessungen bei 1650 nm lieferten einen χ⁽³⁾-Wert von 2,1 x 10⁻¹¹ esu.

Ein entsprechend hergestellter Film aus Mischungen aus 50 Gew.-% des nach Beispiel 2 erhaltenen Polyanils und 50 Gew.-% Polymethylmethacrylat ergaben bei Frequenzverdreifachungsmessungen bei 1650 nm einen χ⁽³⁾-Wert von 1,2 x 10⁻¹¹ esu.

## Patentansprüche

1. Polyanile der allgemeinen Formel I 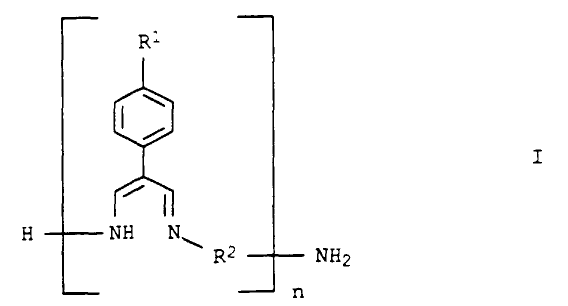 in der die Substituenten und Indices folgende Bedeutung haben:
R¹ C₁- bis C₂₄-Alkylgruppen, C₁- bis C₂₄-Alkoxygruppen, Cl, Br, CF₃ oder NO₂
R² para-Phenylen, kondensierte aromatische Ringsysteme mit 10 bis 30 C-Atomen oder 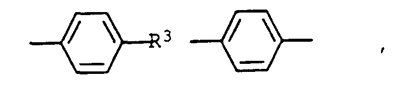
wobei R³ eine chemische Bindung S, O, NH, CH₂, CH=CH, CO, SO oder SS bedeutet
und
n eine ganze Zahl von 5 bis 100
sowie deren Säureadditionssalze der allgemeinen Formel II 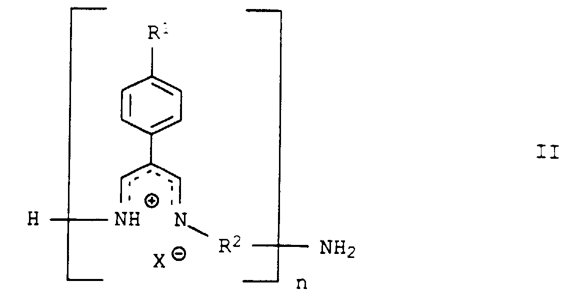 in der X⁻ für ClO₄⁻, BF₄⁻ AsF₆⁻ oder 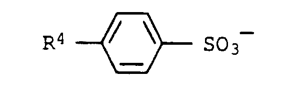 steht, wobei R⁴ eine C₁- bis C₈-Alkylgruppe bedeutet.

2. Mischungen, enthaltend Polyanile gemäß Anspruch 1 und transparente organische Polymere.

3. Verfahren zur Herstellung von Polyanilen gemäß Anspruch 1, dadurch gekennzeichnet, daß man in einem ersten Schritt Verbindungen der allgemeinen Formel III 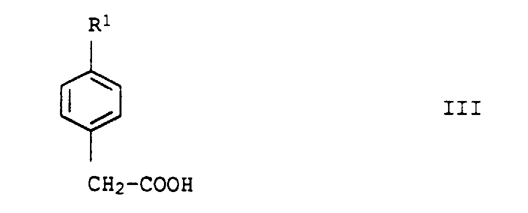 einer Vilsmeier-Haack-Arnold-Reaktion unterwirft und somit ein Amidin erzeugt, welches in einem zweiten Schritt durch Zugabe aromatischer Diamine zu den Polyanilen der allgemeinen Formel I umgesetzt wird.

4. Verwendung von Polyanilen gemäß Anspruch 1 als elektrisch leitfähige Materialien.

5. Verwendung von Polyanilen nach Anspruch 1 als nichtlinear optische Materialien.

6. Lösungen, enthaltend Polyanile gemäß Anspruch 1.

7. Verwendung der Lösungen gemäß Anspruch 8 zum Beschichten von Trägermaterialien.

8. Beschichtete Trägermaterialien, enthaltend Polyanile gemäß Anspruch 1.

9. Verwendung der beschichteten Trägermaterialien gemäß Anspruch 8 als optoelektrische Bauteile.

10. Verwendung der beschichteten Trägermaterialien nach Anspruch 9 als nichtlinear optische Bauteile.

## Claims

1. A polyanil of the formula I 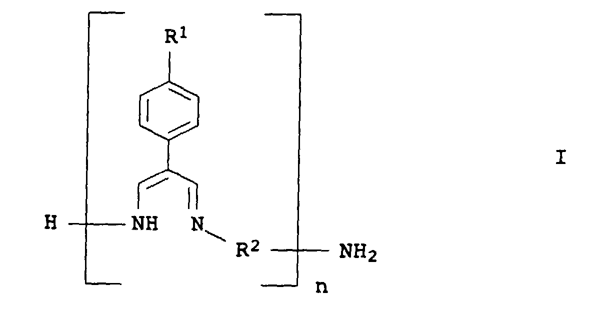 where
R¹ is C₁-C₂₄-alkyl, C₁-C₂₄-alkoxy, Cl, Br, CF₃ or NO₂,
R₂ is para-phenylene, a fused aromatic ring system of 10 to 30 carbon atoms or 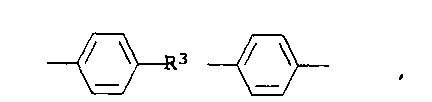
R₃ is a chemical bond, S, O, NH, CH₂, CH=CH, CO, SO or SS
and
n is an integer from 5 to 100,
and its acid addition salts of the formula II 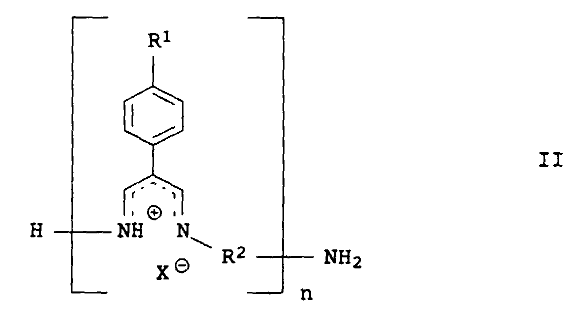 where X⁻ is ClO₄⁻, BF₄⁻ , AsF₆⁻ or 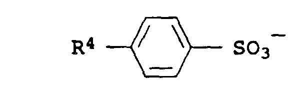 and R⁴ is C₁-C₈-alkyl.

2. A mixture containing a polyanil as claimed in claim 1 and transparent organic polymers.

3. A process for the preparation of a polyanil as claimed in claim 1, wherein, in a first step, a compound of the formula III 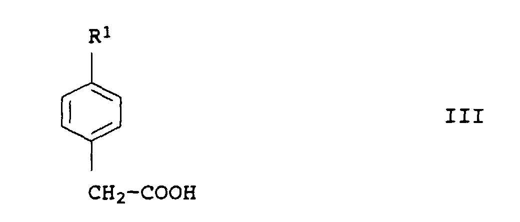 is subjected to a Vilsmeier-Haack-Arnold reaction to give an amidine which is converted in a second step, by the addition of an aromatic diamine, into a polyanil of the formula I.

4. Use of a polyanil as claimed in claim 1 as an electrically conductive material.

5. Use of a polyanil as claimed in claim 1 as a nonlinear optical material.

6. A solution containing a polyanil as claimed in claim 1.

7. Use of a solution as claimed in claim 8 for coating substrates.

8. A coated substrate containing a polyanil as claimed in claim 1.

9. Use of a coated substrate as claimed in claim 8 as an opto-electrical component.

10. Use of a coated substrate as claimed in claim 9 as a nonlinear optical component.

## Revendications

1. Polyaniles de formule générale I 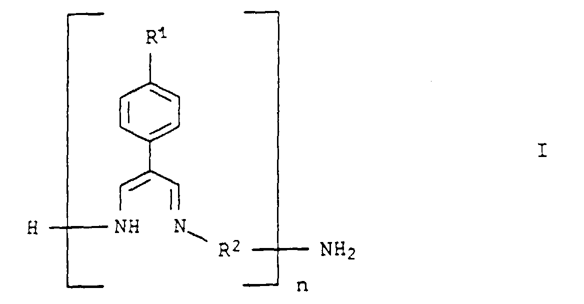 dans laquelle les substituants et l'indice ont les significations suivantes:
R¹ groupements alkyle en C₁-C₂₄, groupements alcoxy en C₁-C₂₄, atomes de Cl, de Br, groupements CF₃ ou NO₂,
R² groupements para-phénylène, systèmes cycliques aromatiques condensés à 10-30 atomes de carbone ou 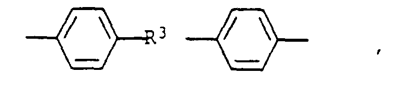
où R³ représente une liaison chimique, S, O, NH, CH₂, CH=CH, CO, SO ou SS, et
n nombre entier de 5 à 100,
ainsi que leurs sels d'addition d'acide de formule générale II 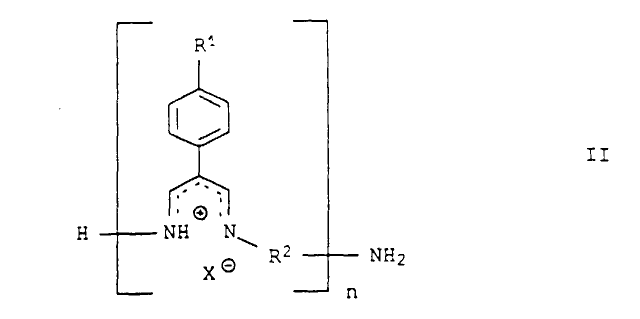 dans laquelle X⁻ est mis pour ClO₄⁻, BF₄⁻, ASF₆⁻ ou 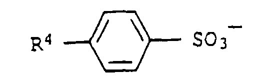 R⁴ représentant un groupement alkyle en C₁-C₈.

2. Mélanges, contenant des polyaniles selon la revendication 1 et des polymères organiques transparents.

3. Procédé de préparation de polyaniles selon la revendication 1, caractérisé en ce que, dans une première étape, on soumet des composés de formule générale III 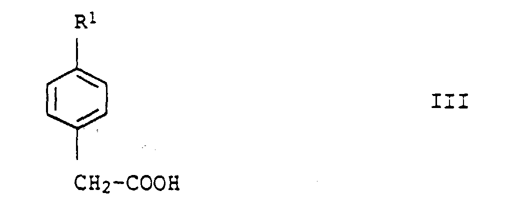 à une réaction de Vilsmeier-Haack-Arnold et on produit ainsi une amidine qui est convertie, dans une seconde étape, en les polyaniles de formule générale I par addition de diamines aromatiques.

4. Utilisation de polyaniles selon la revendication 1 comme matières électroconductrices.

5. Utilisation de polyaniles selon la revendication 1 comme matières à propriétés optiques non linéaires.

6. Solutions, contenant des polyaniles selon la revendication 1.

7. Utilisation des solutions selon la revendication 6 pour l'enduction de matériaux de support.

8. Matériaux de support enduits, contenant des polyaniles selon la revendication 1.

9. Utilisation des matériaux de support enduits selon la revendication 8 comme éléments de construction opto-électriques.

10. Utilisation des matériaux de support enduits selon la revendication 9 comme éléments de construction à propriétés optiques non linéaires.
